# EUROPEAN PATENT APPLICATION

(11) **EP 1 418 097 A2**
(43) Date of publication of application: **12.05.2004**
(21) Application number: 03380254.7
(22) Date of filing: 31.10.2003
(51) Int. Cl.: B60R 25/00

(54) **Anti-theft device**

(30) Priority: 11.11.2002 ES 200202576
(71) Applicant: Lopez Berlanga, Javier, 29568 Pizarra (Malaga) (ES); Moreno Gonzalez, Antonio, 29568 Pizarra (Malaga) (ES)
(72) Inventor: Lopez Berlanga, Javier, 29568 Pizarra (Malaga) (ES); Moreno Gonzalez, Antonio, 29568 Pizarra (Malaga) (ES)
(74) Representative: PROPI, S.L.

(57) **Abstract**

Vehicle anti-theft device which comprises a remote control (1) and a data switching exchange (10), with the remote control having a switch, a button for either automatic or manual mode operation, an emitter module and another radio frequency receiver, a supply battery and jacks to connect the supply with booster battery, the data switching exchange (10) incorporating speedometer signal inputs, a door switch, a sound emitter outlet, ground connection (14), connection for the radio frequency receiver antenna, supply, an outlet for ignition cut out, and activation of hazard lights.

## Description

### OBJECT OF THE INVENTION

The present specification relates to an application for a Patent of Invention, corresponding to a vehicle anti-theft device, whose objective is to be able to avoid the theft of a motor vehicle when this is functioning, i.e. when the vehicle has been started with the keys and has begun running, the invention having the essential quality that, if in a predetermined time, which might be between 5 and 10 seconds, the vehicle equipped with the anti-theft device does not detect that the person who has started the vehicle is the owner thereof, it will emit a sound or message which will indicate to the user that he/she should immobilise the vehicle, as the ignition mechanism of the vehicle will subsequently be disconnected and its four indicators or warning lights start working, with the vehicle remaining completely stationary and with the indicators working until the owner recovers possession of the vehicle, starting said vehicle by means of the working guidelines established for its operation.

It should be indicated that during the period of time that the vehicle remains immobilised the indicators will not stop working, and at the same time if the fraudulent user thereof is in a dangerous situation, e.g. overtaking, then the vehicle will permit its normal operation before being subsequently immobilised.

### FIELD OF THE INVENTION

This invention is for application within the industry dedicated to the manufacture of instruments, devices and security elements for motor vehicles.

### BACKGROUND OF THE INVENTION

The applicant does not know of the existence at the present time of an invention which has the same characteristics, previously indicated as fundamental, therein.

### DESCRIPTION OF THE INVENTION

The vehicle anti-theft device that the invention proposes is an electronic device, capable of preventing the theft of a vehicle, even if the vehicle incorporates the ignition key when starting, having at the same time a double usefulness, since once this anti-theft and security device has immobilised the vehicle as a result of not being the authorised driver, the vehicle will be totally protected by the invention, and also due to the fact that the security device will not permit it to be restarted, even with the keys, until it detects its owner.

More specifically, the vehicle anti-theft device object of the invention is made from a body installed in the vehicle with the help of an auxiliary device which, when the vehicle starts running, will try to detect the owner during a security period, and simultaneously emit a sound or message which will inform the user that it has not detected him/her as the owner, and as a result of which the vehicle must remain stationary, since if the vehicle is not parked or stopped, the vehicle will be immobilised and the hazard lights will be connected.

However, if on the other hand the vehicle detects the user through the device and considers him/her to be the owner, the device will then stop the action it has been taking and let the user drive the vehicle without any kind of problems.

There are two options with this last application, since the device may stop working until the vehicle has been immobilised, or the device will not start working until the vehicle has been immobilised and one of its doors has been opened.

It must be highlighted that the device's recognition of the driver of the vehicle may be achieved in one of two ways, either automatically or manually.

The invention works by means of a radio frequency remote control, constructed so that the range of its signal is adjustable, i.e. it may be adjusted in order to detect the user just a few centimetres away or a large number of metres away which, in this case, will guarantee recognition when the user is at a distance of approximately just 1 metre, so that the device can be assured that the user is the owner, with the objective of verifying that when the user is ready to start driving the vehicle, this device can recognize him/her, avoiding that when the user is a few metres away from the vehicle, and someone tries to steal the device, then this device would be able to detect any possible fraudulent use, and judge that the person that is going to use it is not its owner.

As a result, the device in question is able to ask the user, generally its owner, the operating code, and after recognition permit its conventional use, since if the code was not entered and the device did not make the recognition, the vehicle would stop in accordance with the action of the device.

The part responsible for identifying the driver is configured as a radio frequency remote control with a specific code, which will be responsible for transmitting if the user is the owner or not to the device, and therefore this information sent automatically will involve the device asking or not asking whether the user is the owner or not of the vehicle, and if not recognised as so, the device will emit a signal which will or will not identify the user.

It should be indicated that the radio frequency emitter or remote control emits waves which are officially approved by the European Union for remote controls.

The remote control has a manual mode button and a switch which will be responsible for selecting either manual or automatic mode, as well as a LED (Light Emitting Diode), whose function is to indicate luminously that the remote control in question is emitting, and at the same time has an emitter and a radio frequency receiver.

It should be indicated that the remote control has different dimensions with regard to a conventional remote control or one used manually, or a remote control that may be used either automatically or manually.

The invention enables the connection of a key-operated switch that will enable disconnection of the circuit in case of malfunction.

The invention can be used in any motor vehicle that has an ignition device and also a battery power supply.

The remote control has a connector so it can be connected to the vehicle's battery if it runs out of supply, or also if a rechargeable battery is connected for recharging after connecting it.

The entire invention is protected against any possible polarity changes and current overloads.

### DESCRIPTION OF THE DRAWINGS

To complement this description and in order to provide a better understanding of the characteristics of the invention, a set of drawings accompanies the specification as an integral part thereof wherein, with illustrative and non-limiting characteristics, the following is shown:
Figure number 1 shows a plan view of the remote control incorporated in the invention relating to a vehicle anti-theft device.
Figure number 2 shows a block diagram of the object of the invention relating to a vehicle anti-theft device.

### PREFERRED EMBODIMENT OF THE INVENTION

From these figures, one can see how the invention comprises a remote control (1) illustrated in figure number 1 and a data switching exchange (10) illustrated in figure number 2.

The remote control (1) comprises a rectangular shaped body with blunt vertices, which incorporates on its surfaces a diode or LED (2), an automatic or manual control switch (3), a button (4) for manual mode operation, a radio frequency emitter module (6), a radio frequency receiver module (7) and jacks (8) to connect the remote control (1) supply to an booster battery and a supply battery (5).

Together with the elements previously described, the invention has a data switching exchange (10), which includes a speedometer signal input (11), as well as a door switch input (12), an sound or voice message emitter outlet (13) emitting sound or a voice message that the invention does not detect the user, plus a ground input (14), an input for radio frequency receiver antenna (17), an input for radio frequency emitter antenna (18), a 12V power input (19), an outlet (15) for ignition cut out and an outlet (16) for the activation of the hazard lights, divided in two parts.

The data switching exchange includes a buzzer or acoustic emitter that emits a signal upon detection.

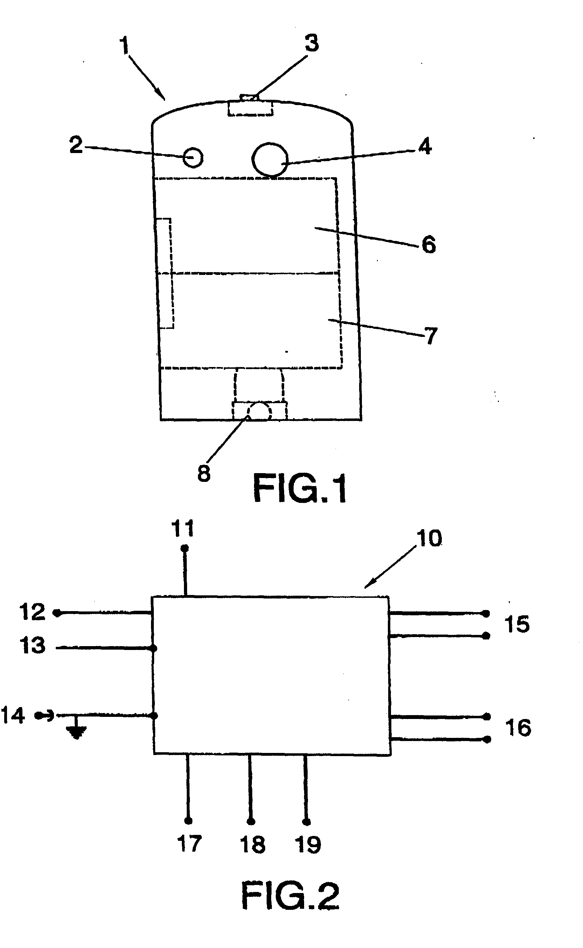

## Claims

1. Vehicle anti-theft device, of the type made from electronic equipment, capable of preventing the theft of a motor vehicle, when this is running, i.e. when the engine is started by the use of keys and when the manoeuvring of the vehicle has begun and, if in a predetermined period and once it has duly established that the driver of the vehicle is not the owner, will emit messages that will tell us we must immobilise the vehicle, **characterized in that** it comprises a remote control and a data switching exchange, the remote control having a rectangular body configuration with blunt vertices, equipped with a diode or LED (2), a switch (3) for either automatic or manual use, a button (4) for its manual mode operation, a radio frequency emitter module (6), a radio frequency receiver module (7), a supply battery (5) and jacks (8) to connect the remote control (1) supply to the booster battery.

2. Vehicle anti-theft device as claimed in claim 1, **characterized in that** the data switching exchange (10) includes a speedometer signal input (11), a door switch input (12), a sound or voice message emitter outlet (13) for identification of the user, a ground input (14), an input for radio frequency receiver antenna (17), an input for a radio frequency emitter antenna (18), a 12V power input (19), an outlet (15) for ignition cut out and an outlet (16) for the activation of the hazard lights.

3. Vehicle anti-theft device as claimed in the preceding claims, **characterized in that** the data switching exchange includes a buzzer or acoustic emitter.
